# EUROPÄISCHE PATENTANMELDUNG

(11) **EP 0 762 034 A1**
(43) Veröffentlichungstag der Anmeldung: **12.03.1997**
(21) Anmeldenummer: 96110120.1
(22) Anmeldetag: 22.06.1996
(51) Int. Cl.: F16L 33/22

(54) **Klemmverbinder**

(30) Priorität: 16.08.1995 DE 29513105 U
(71) Anmelder: REHAU AG + Co, 95111 Rehau (DE)
(72) Erfinder: Brun, Uwe, 95111 Rehau (DE)

(57) **Zusammenfassung**

Die Erfindung betrifft einen zweiteiligen Klemmverbinder für Rohre und Schläuche aus polymerem Werkstoff. Der Klemmverbinder besitzt ein als Rohrhülse ausgebildetes Verbindungsstück (1) welches einen in das Rohrende einzusetzenden, mit Umfangsrippen (21, 22, 23, 24) versehenen Steckbereich (2) aufweist. An diesen Steckbereich (2) schließt sich ein Flanschansatz an. Der Klemmverbinder besteht ferner aus einer axial zur Rohrachse beweglichen Schiebehülse (5), die unter Herstellung der Klemmverbindung über das Rohrende mit dem eingesetzten Steckbereich (2) überschiebbar ist. Der Flanschansatz besteht erfindungsgemäß als Abschluß des Steckbereichs (2) aus an dessen Umfang angeordneten, zahnartigen Erhöhungen (3). Zwischen den einzelnen zahnartigen Erhöhungen (3) sind Spaltöffnung (33) angeordnet, welche bis zum Umfangsniveau des Steckbereichs (2) verlaufen.

## Beschreibung

Die Erfindung betrifft einen zweiteiligen Klemmverbinder für Rohre und Schläuche aus polymerem Werkstoff mit einem als Rohrhülse ausgebildeten Verbindungsstück, das einen in das Rohrende einzusetzenden, mit Umfangsrippen versehenen Steckbereich aufweist, an den sich ein Flanschansatz anschließt, sowie mit einer axial zur Rohrachse beweglichen Schiebehülse, die unter Herstellung der Klemmverbindung über das Rohrende mit dem eingesetzten Steckbereich überschiebbar ist.

Aus der DE 36 08 843 C2 ist ein Verfahren zur Herstellung einer Klemmverbindung für Rohre und Schläuche aus polymeren Werkstoffen bekannt. Das dabei verwendete Verbindungsstück besteht aus einem Gewindeteil, an das sich der Flanschansatz und der Steckbereich anschließt. Der Flanschansatz ist als rundumlaufender Ring mit glatter Oberfläche gestaltet und überragt das Gewindeteil und die am äußeren Umfang des Steckbereichs im Abstand von einander angeordneten Umfangsrippen, die zwischen sich Umfangsnuten einschließen.

Zur Herstellung der Steckverbindung wird der Steckbereich mit den Umfangsrippen in das vorher aufgeweitete Kunststoffrohr eingeführt und danach wird die vorher auf das Kunststoffrohr aufgeschobene Schiebehülse axial über die Kombination Kunststoffrohr-Steckbereich so weit übergeschoben, daß die Schiebehülse mit ihrer vorderen Stirnfläche am Flanschansatz anliegt. Damit ist die Verbindung zwischen dem Klemmverbinder und dem Rohr flüssigkeitsdicht hergestellt.

In Erweiterung dieses Standes der Technik ist aus dem DE-U 88 13 209 ein zweiteiliger metallischer Klemmverbinder bekannt, bei dem die dem Flanschansatz zugewandte Umfangsrippe des Steckbereiches die axial davor angeordneten Umfangsrippen in der Höhe überragt. Dabei ist die Außenflanke dieser höheren Umfangsrippe als Anschlag für die Stirnfläche des aufgeschobenen Rohres ausgebildet. Durch diese höhere Umfangsrippe, den Flanschansatz und das am Flanschansatz anliegende freie Ende der Schiebehülse wird eine Aufnahmekammer für beim Aufpressen der Schiebehülse verpresstes Rohrwandmaterial gebildet.

Die nach dem Stand der Technik hergestellten Klemmverbinder sind in ihren Einzelteilen Verbindungsstück und Schiebehülse aus Metall gefertigt. Obwohl mit dieser Klemmverbindung eine einwandfreie, flüssigkeitsdichte und unlösbare Verbindungsmöglichkeit für Kunststoffrohre und -schläuche mit Verbindungselementen gegeben ist, hat sich das hohe Gewicht und die Kosten für die Metallverbinder, die aus korrosionsfesten Buntmetallen gefertigt werden, als nachteilig erwiesen. Hier setzt die Erfindung ein, die es sich zur Aufgabe gestellt hat, zumindest das Verbindungsstück aus polymeren Materialien zu fertigen, um damit eine Gewichtsreduzierung und gleichzeitige Kostenminderung zu erreichen. Zu diesem Zweck wird insbesondere der aus dem Stand der Technik bekannte Flanschansatz des Verbindungsstückes in völlig neuer Art gestaltet. Erfindungsgemäß wird hierzu vorgeschlagen, daß der Flanschansatz als Abschluß des Steckbereichs aus an dessen Umfang angeordneten, zahnartigen Erhöhungen besteht, und daß zwischen den einzelnen zahnartigen Erhöhungen Spaltöffnungen angeordnet sind, welche bis zum Umfangsniveau des Steckbereichs verlaufen. Vorteilhaft sind wenigstens zwei solcher zahnartigen Erhöhungen am Umfang des Steckbereichs angeordnet.

Es hat sich als zweckmäßig herausgestellt, daß der Abstand der den Umfangsippen zugewandten Flanke der zahnartigen Erhöhungen von der nächstliegenden Umfangsrippe größer ist als der Abstand der einzelnen Umfangsrippen untereinander. In diesen Größenabstand ragen an den den Umfangsrippen zugewandten Flanken der zahnartigen Erhöhungen angeformte Anschlagelemente hinein, welche ebenfalls die Höhe der Umfangsrippen überragen und mit ihren den Umfangsrippen zugewandten Außenflanken als Anschlag für die Stirnfläche des auf den Steckbereich aufgeschobenen Rohres ausgebildet sind.

Die zahnartigen Erhöhungen können rechteckig mit umlaufend steilen Flanken ausgebildet sein, wobei die längeren Seiten des Rechtecks axial verlaufen. Sie können aber auch eine zu den Umfangsrippen abgeschrägte Grundform aufweisen, wobei die den Umfangsrippen zugewandte Flanke steil aufsteigend vom Umfang des Steckbereichs bis zu einer die Umfangsrippen überragenden Höhe und von dort in Längsrichtung schräg ansteigend bis zur Kante der höchsten Steigung verläuft, von wo aus sich der Verlauf geradlinig oder abfallend erstreckt. Die zahnartigen Erhöhungen können im Bereich der abgeschrägten Grundform unter Beibehaltung eines Mittelsteges seitliche, taschenartige Aussparungen besitzen, deren Bodenflächen an Höhe von vorn nach hinten stetig zunehmen.

Die zahnartigen Erhöhungen leiten die durch das Überpressen der Schiebehülse erzeugten Kräfte in das Verbindungsstück weiter. Hierbei kann die einzelne zahnartige Erhöhung je nach Leistungsfähigkeit des zur Herstellung ausgewählten Kunststoffmaterials axial verlaufend in kürzerer oder längerer Form ausgeführt sein. So hat sich beispielsweise bei der Verwendung eines Kunststoffmaterials Polyamid 30 GF eine Zahnhöhe von 5 mm und eine Mindestlänge von 7 mm pro zahnartiger Erhöhung als brauchbare Abmessungsvorschrift bewährt.

In der Zeichnung sind Ausführungsbeispiele des erfindungsgemäßen Klemmverbinders schematisch dargestellt; es zeigt:
Fig. 1 den Steckbereich des Verbindungsstücks mit Flanschansatz
Fig. 2 das auf den Steckbereich des Verbindungsstückes nach Fig. 1 aufgeschobene Schlauchende
Fig. 3 die Kombination Schlauchende-Verbindungsstück aus Fig. 2 mit übergeschobener Schiebehülse
Fig. 4 eine Variante in der Gestaltung der zahnartigen Erhöhungen des Verbindungsstückes
Fig. 5 eine weitere Gestaltungsform der Variante gemäß Fig. 4
Fig. 6 einen T-Fitting mit einer Kombination der Gestaltung der zahnartigen Erhöhungen nach Fig. 1 und Fig. 4

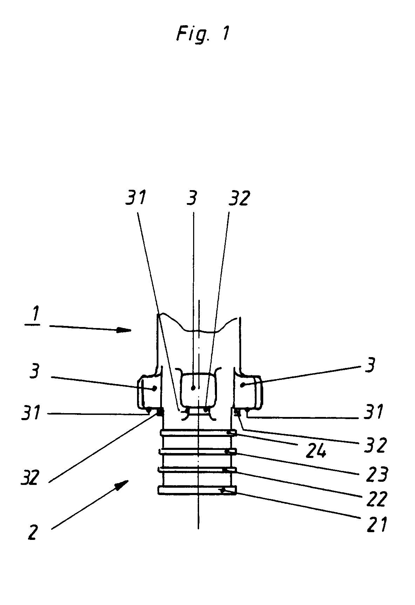

In Fig. 1 ist das Verbindungsstück 1 mit weggeschnittenem Gewindeteil dargestellt. Der Steckbereich 2 des Verbindungsstücks 1 besteht aus vier im Abstand voneinander angeordneten Umfangsrippen 21, 22, 23, 24. Zwischen der letzten Rippe 24 und der dieser zugewandten Stirnfläche 31 der zahnartigen Erhöhungen 3 ist ein größerer Abstand vorgesehen, als der Abstand zwischen den einzelnen Umfangsrippen 21, 22, 23, 24 beträgt. An den den Umfangsrippen 21, 22, 23, 24 zugewandten Außenflanken 31 der zahnartigen Erhöhungen 3 sind Anschlagelemente 32 angeformt, welche die Höhe der Umfangsrippen geringfügig überragen.

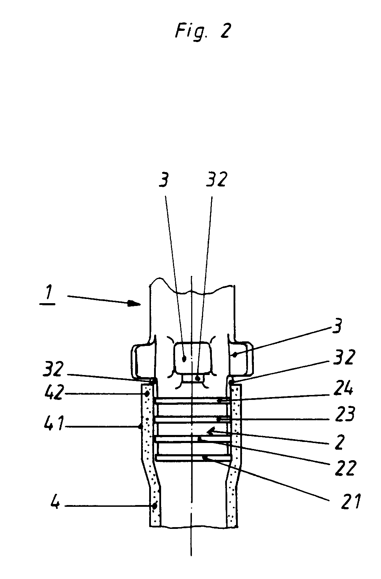

Fig. 2 zeigt das auf den Steckbereich 2 des Verbindungsstücks 1 aufgeschobene Ende 41 des Schlauches 4. Das aufgeschobene Schlauchende 41 ist gegenüber dem Umfang des Schlauches 4 aufgeweitet, um über die Umfangsrippen 21, 22, 23, 24 des Steckbereichs 2 des Verbindungsstückes 1 übergeschoben werden zu können. Das freie Ende 42 des Schlauches 4 liegt in der gezeigten Darstellung an den Außenflanken der Anschlagelemente 32 an, welche vor den zahnartigen Erhöhungen 3 in Richtung auf die Umfangsrippen 21, 22, 23, 24 angeordnet sind. Die gezeigte Darstellung ist die Endstellung beim Überschieben des aufgeweiteten Endes 41 des Schlauches 4 auf den Steckbereich 2.

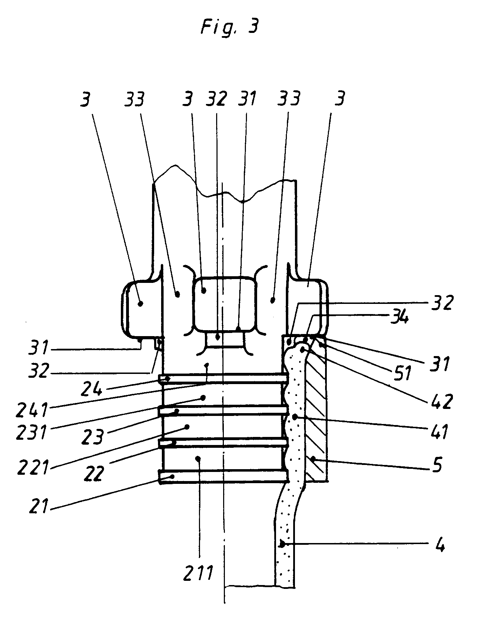

Fig. 3 zeigt die Kombination Schlauchende-Verbindungsstück aus Fig. 2 mit übergeschobener Schiebehülse 5. Gleiche Merkmale haben bei dieser Darstellung die gleichen Bezugszeichen erhalten wie in Fig. 1 und 2.

Die Schiebehülse 5 hat auf das Ende 41 des Schlauches 4 eine Presswirkung in radialer, aber auch in axialer Richtung ausgeübt. In der gezeigten Darstellung ist der überschiebevorgang der Schiebehülse abgeschlossen. Diese stößt mit ihrem vorderen freien Ende 51 an die Außenflanke 31 der zahnartigen Erhöhungen 3 an: Mit diesem Anstoßen ist der Überschiebevorgang beendet.

Die radialen Presskräfte der Schiebehülse 5 haben bewirkt, daß das Ende 41 des Schlauches 4 partiell in die durch die Abstände der Umfangsrippen 21, 22, 23, 24 gebildeten Umfangsnuten 211, 221, 231, 241 eingedrungen ist. Bei der letzten Umfangsnut 241 wird dieses Eindringen des Schlauchwandmaterials partiell begrenzt durch die Anschlagelemente 32 vor den zahnartigen Erhöhungen 3. Diese Anschlagelemente 32 und die zahnartigen Erhöhungen bedecken jedoch nicht den ganzen Umfang des Steckbereichs 2, sondern lassen zwischen sich Durchgangsbereiche 33 frei, in die das überschüssige verpresste Kunststoffmaterial des Endes 41 des Schlauches 4 einfließen kann.

In der gezeigten Darstellung ist in der rechten Bildhälfte das Ende 41 des Schlauches 4 in seiner durch die Schiebehülse 5 auf dem Steckbereich 2 verpressten Stellung gezeigt. Das freie Ende 42 des Schlauches 4 ist dabei teilweise in den Aufnahmeraum 34 eingedrungen, der durch das freie Ende 51 der Schiebehülse 5, der Außenflanke 31 der zahnartigen Erhöhung 3 sowie den Anschlagelementen 32 gebildet ist. An den Außenflanken der Anschlagelemente 32 vorbei kann dieses axial verpresste Schlauchwandmaterial zusätzlich in die Durchgangsöffnungen 33 eindringen, die zwischen den zahnartigen Erhöhungen 3 am Umfang des Steckbereiches angeordnet sind. Auf diese Weise ist die Gewähr dafür gegeben, daß das beim überschieben der Schiebehülse 5 über das Ende 41 des Schlauches 4 axial verpresste Rohrwandmaterial in den Aufnahmeraum 34 und in die Durchgangsöffnungen 33 einfließen kann, ohne daß das freie Ende 51 der Schiebehülse 5 durch zu großen Druckaufbau in diesem Bereich bei Beendigung des Vorschiebevorgangs beschädigt werden könnte.

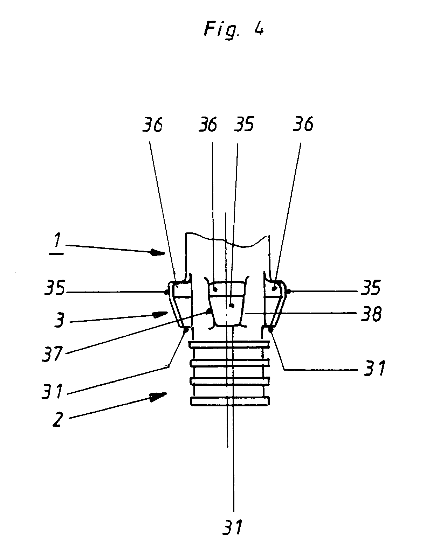

In Fig. 4 ist eine Variante in der Gestaltung der zahnartigen Erhöhungen 3 des Verbindungsstückes 1 dargestellt. Diese Variante ist beispielsweise vorgesehen für Montagewerkzeuge mit integrierter Wegbegrenzung. Bei solchen Werkzeugen können die Außenflanken 31 der zahnartigen Erhöhungen 3 aus Fig. 3 für den Anschlag des freien Endes 51 der Schiebehülse 5 beim Überschieben über den Steckbereich 2 entfallen. Die aus Fig. 3 bekannten zahnartigen Erhöhungen 3 und Anschlagelemente 32 vereinigen sich dadurch zu einer Einheit.

In der gezeigten Darstellung besitzen die zahnartigen Erhöhungen 3 eine zu den Umfangsrippen 21, 22, 23, 24 abgeschrägte Grundform. Die den Umfangsrippen 21, 22, 23, 24 zugewandte Flanke 31 steigt dabei steil vom Umfang des Steckbereichs 2 auf bis zu einer Höhe, die die Umfangsrippen 21, 22, 23, 24 geringfügig überragt. Vom höchsten Punkt dieser Flanke verläuft der Anstieg schräg bis zur Kante 35 der höchsten Steigung. Von dieser Kante der höchsten Steigung ist der Verlauf zunächst über ein kurzes Stück 36 gradlinig und danach steil abfallend bis zum Umfang des Verbindungsstückes 1.

Die Seitenflanken 37, 38 der zahnartigen Erhöhungen 3 sind in der gezeigten Darstellung in Achsrichtung schräg verlaufend dargestellt. Die einzelne zahnartige Erhöhung 3 wird also bei dieser Ausführungsform von der den Umfangsrippen 21, 22, 23, 24 zugewandten Außenflanke 31 an nach hinten verlaufend breiter. Auf diese Weise wird der Fließweg des durch die in der Zeichnung nicht dargestellten Schiebehülse 5 axial verpressten Endes 41 des Schlauches 4 vorgegeben.

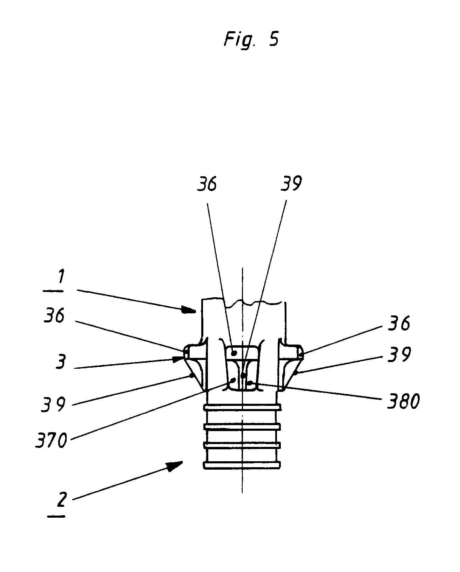

In Fig. 5 ist eine weitere Gestaltungsform der zahnartigen Erhöhungen 3 nach Fig. 4 gezeigt. Die zahnartigen Erhöhungen 3 sind hier mit jeweils zwei taschenartigen Aussparungen 370, 380 dargestellt, die durch einen Steg 39 als Mittelbereich voneinander getrennt sind. Dieser Steg 39 verläuft entsprechend der Figurenbeschreibung der zahnartigen Erhöhungen 3 zu Fig. 4 schräg bis zur Basis 36 der einzelnen zahnartigen Erhöhung 3. Die taschenartigen Ausnehmungen 370, 380 bewirken eine kontinuierliche Steifigkeitserhöhung des Bauteils. Diese Wirkung ist auch bei der Schrägstellung der zahnartigen Erhöhungen nach Fig. 4 zu beobachten. Bei der Ausführungsform nach Fig. 5 bleibt die Stirnfläche des Mittelsteges 39 nach vorn hin als Anschlag für das freie Ende 42 des Schlauches 4 bei dessen Überschieben über den Stegbereich 2 erhalten.

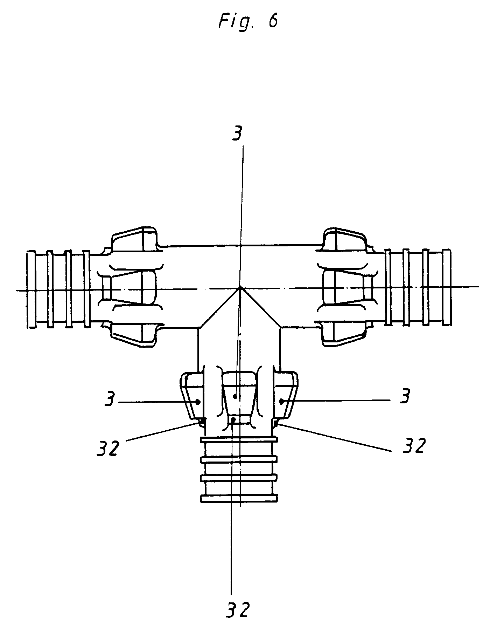

Fig. 6 zeigt einen T-Fitting in einer Kombination der Gestaltung der zahnartigen Erhöhungen nach Fig. 1 und Fig. 4. Hier ist das Anschlagelement 32 der einzelnen, schräg verlaufenden zahnartigen Erhöhung 3 vorgelagert. Auf diese Weise kann der schräge Anstieg der zahnartigen Erhöhung 3 in seiner Winkelstellung variiert werden, da die den Umfangsrippen 21, 22, 23, 24 zugewandte Außenflanke 31 der zahnartigen Erhöhung 3 nicht direkt als Anschlagfläche für das freie Ende 42 des Schlauches 4 dienen muß.

## Patentansprüche

1. Zweiteiliger Klemmverbinder für Rohre und Schläuche aus polymerem Werkstoff mit einem als Rohrhülse ausgebildeten Verbindungsstück, das einen in das Rohrende einzusetzenden, mit Umfangsrippen versehenen Steckbereich aufweist, an den sich ein Flanschansatz anschließt, sowie mit einer axial zur Rohrachse beweglichen Schiebehülse, die unter Herstellung der Klemmverbindung über das Rohrende mit dem eingesetzten Steckbereich überschiebbar ist, dadurch gekennzeichnet, daß der Flanschansatz als Abschluß des Steckbereichs (2) aus an dessen Umfang angeordneten, zahnartigen Erhöhungen (3) besteht, und daß zwischen den einzelnen zahnartigen Erhöhungen (3) Spaltöffnungen (33) angeordnet sind, welche bis zum Umfangsniveau des Steckbereichs (2) verlaufen.

2. Klemmverbinder nach Anspruch 1, dadurch gekennzeichnet, daß wenigstens zwei solcher zahnartigen Erhöhungen (3) am Umfang des Steckbereichs (2) angeordnet sind.

3. Klemmverbinder nach Ansprüchen 1 und 2, dadurch gekennzeichnet, daß der Abstand der den Umfangsrippen (21, 22, 23, 24) zugewandten Flanke (31) der zahnartigen Erhöhungen (3) von der nächstliegenden Umfangsrippe (24) größer ist als der Abstand der einzelnen Umfangsrippen (21, 22, 23, 24) untereinander.

4. Klemmverbinder nach Ansprüchen 1, 2 und 3, dadurch gekennzeichnet, daß an den den Umfangsrippen (21, 22, 23, 24) zugewandten Flanken (31) der zahnartigen Erhöhungen (3) Anschlagelemente (32) angeformt sind, welche die Höhe der Umfangsrippen (21, 22, 23, 24) überragen und mit ihren den Umfangsrippen (21, 22, 23, 24) zugewandten Außenflanken als Anschlag für die Stirnfläche (42) des auf den Steckbereich (2) aufgeschobenen Rohres (4) ausgebildet sind.

5. Klemmverbinder nach Anspruch 1, dadurch gekennzeichnet, daß die zahnartigen Erhöhungen (3) rechteckig mit umlaufend steilen Flanken ausgebildet sind, wobei die längeren Seiten des Rechtecks axial verlaufen.

6. Klemmverbinder nach Ansprüchen 1 und 5, dadurch gekennzeichnet, daß die zahnartigen Erhöhungen (3) eine zu den Umfangsrippen (21, 22, 23, 24) abgeschrägte Grundform aufweisen, wobei die den Umfangsrippen (21, 22, 23, 24) zugewandte Flanke (31) steil aufsteigend vom Umfang des Steckbereichs bis zu einer die Umfangsrippen (21, 22, 23, 24) überragenden Höhe und von dort in Längsrichtung schräg ansteigend bis zur Kante (35) der höchsten Steigung verläuft, von wo aus sich der Verlauf gradlinig und danach abfallend erstreckt.

7. Klemmverbinder nach Anspruch 6, dadurch gekennzeichnet, daß die zahnartigen Erhöhungen (3) im Bereich der abgeschrägten Grundform unter Beibehaltung eines Mittelsteges (39) seitliche, taschenartige Aussparungen (370, 380) besitzen, deren Bodenflächen an Höhe von vorn nach hinten stetig zunehmen.
